# EUROPEAN PATENT SPECIFICATION

(11) **EP 3 338 146 B1**
(45) Date of publication and mention of the grant of the patent: **07.04.2021**
(21) Application number: 15901865.4
(22) Date of filing: 05.10.2015
(51) Int. Cl.: G05B 11/01, G05B 23/02, G06F 11/07, G05B 15/02

(54) **POTENTIAL VOLTAGE AND HAZARD STOP SYSTEM**
SPANNUNGSSTOPPSYSTEM BEI MÖGLICHER GEFAHR
SYSTÈME D'ARRÊT DE TENSION EN CAS DE RISQUE POTENTIEL

(30) Priority: 18.08.2015 US 201514829589; 18.09.2015 US 201562220252 P
(43) Date of publication of application: 27.06.2018
(73) Proprietor: McCune, Chuck, Albuquerque, NM 87195 (US)
(72) Inventor: McCune, Chuck, Albuquerque, NM 87195 (US); Rice, Maxim K., Albuquerque, NM 87111 (US); Wilson, Scott Richard, Corrales, NM 87048 (US)
(74) Representative: Van Breda, Jacobus
(86) International application number: PCT/US2015/054072
(87) International publication number: WO 2017/030597

(56) References cited:
- US-A- 4 628 306
- US-A1- 2009 084 426
- US-A1- 2009 207 543
- US-A1- 2010 081 411
- US-A1- 2010 321 148
- US-A1- 2011 172 842
- US-A1- 2012 316 802
- US-B2- 8 854 193
- 'PV Stoptm -Potential Voltage and Hazard Stop System for Licensing & distribution under the Trademark mccune works inc', [Online] 14 June 2013, XP055367082 Retrieved from the Internet: <URL:http://solarprofessional.com/resources /press/mccune-works-inc/pv-stoptm- potential-voltage-and-hazard-stop-system-fo r-licensing>

## Description

### BACKGROUND OF THE INVENTION

### Field of the Invention (Technical Field)

The present invention relates to devices and methods for manually or automatically shutting down supply of power, liquids or gases to buildings or facilities in the cases of emergencies, and for manual or automated shutdown of supplies in other situations. The invention also relates to devices and methods for manually or automatically controlling assemblies of devices through electronic and electro-mechanical means, to shut down, restart, modify input /output, invert, rectify, optimize, enhance safety, provide format matching of device interlocking and connection interfaces for electro-mechanical function, water proofing, electrical connection junctions, coupling of devices, coupling of industry standard devices by existing and future add-on equipment/devices, rapid plug/unplug (plug and play) devices in field installations and factory parts/device assemblies of power, liquids, or gases to buildings or facilities in case of emergencies, for adding or removing ganged assemblies and equipment, reconfiguration, maintenance and service and for manual or automated control in other situations. The invention further relates to devices and methods for self-contained enclosure(s) and rapid installation system for varied energy input, storage and varied output energy management system manually or automatically controlling assemblies of devices through electronic and electro-mechanical means, enclosed in one or more nesting or separate, Mil-Std or other industrial case of any shape or material, enclosures assembled for ease of shipping and installation with handles or grips or other handling configurations on one or more surfaces, to enclose energy storage systems such as batteries or storage system of any type, inverters, energy management systems, charge controllers, Rapid Shutdown systems, to shut down, restart, modify input /output, invert, rectify, optimize, enhance safety, provide format matching of device interlocking and connection interfaces for electro-mechanical function, water proofing, electrical connection junctions, coupling of devices, coupling of industry standard devices by existing and future add-on equipment/devices, rapid plug/unplug (plug and play) devices in field installations and factory parts/device assemblies of power, liquids, materials, processes, or gases to buildings or facilities in case of emergencies, for adding or removing ganged assemblies and equipment, reconfiguration, maintenance and service and for manual or automated control in other situations..

### Background Art

The present invention relates to the Solar PV Panel, Solar electricity industry, Electrical contracting, First Responder Fire/EMS services, Solar PV service technicians and electrical and fire safety, manufacturing, automation, robotic, conveyor system, public or private utility, wind turbine, mechanical contracting, gas, fuel, process piping of air, gas, chemical, any material or any system requiring complete or partial shutdown control for the purpose of mitigating or eliminating any hazard to animal/human/environment health, safety or property. Historically and as renewable energy systems such as wind and solar power become more prevalent, increasingly dangerous conditions exist for first responders to fire and other emergencies. First responders face possibility of electrocution, explosions, hazardous toxic exposure and other threats when responding to emergencies. In the case of solar PV modules on or near a structure, solar panels are electrically energized when exposed to sunlight, any light source including even moonlight. This presents electrocution hazard when fire responders introduce water to attack a fire. An examination of the hazards presenting to first responders and technicians concerning emergencies and repairs it became evident that PV Stop™, the present invention, could mitigate or eliminate many of these hazards presented by solar PV and other charged equipment or systems US2010321148 A1 discloses a computer-implemented method of operating a wireless intelligent solar power reader module.

### BRIEF SUMMARY OF THE INVENTION

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

The present invention provides a system to interrupt the line or supply side power or charged system of any building, appliance, utilization equipment, fuel burning, process piping system, hazmat, conveyor, robotic, automation, vehicle, material handling, backup battery system, backup generator, moving machine parts hazard, wind generator, or power output of a solar PV or any other solar electrical or heat producing device so as to render the system without charge or current output outside of the junction box/enclosure or equipment load supply connection so that emergency first responders or solar/any technician, authorized personnel in any field, system maintenance crew may avoid electrocution, chemical or machine/appliance hazard in the presence of fire, explosion, structural failure/compromise, moisture, flammables, caustics, hazmat, water stream, mist, fogging, physical damage or servicing of the system. The system can be engaged for any anticipated disaster such as fire, hurricane, tornado, earthquake, flood, etc.

The inventive device comprises a control panel, containing a multiplicity of devices, located and properly marked, presumably in building code approved or fire marshal approved location, or any other appropriate location, in readily recognized area such as at the utility service entrance to premises or a substation area within a facility or any other location to communicate commands to any PV Stop controlled equipment.

In the case of a solar PV or solar concentrating system a Wireless Control Personality Module containing receiver/transceiver switch/relay inside, adjacent, near or in proximity to the junction box/enclosure or immediately at the output leads from any solar PV energy source which is activated from a remote or onsite location relative to the solar electrical producing device through a combination of any transmitter/transceiver and any receiver/transceiver, through command protocols generated by Arduino, Raspberry Pi or other similarly capable micro controller platform, wired, wireless, Bluetooth, RF, IR, WiFi, voice command, WAN, LAN, smart phone, GSM, CMDA, tablet, computer or any other signal, direct signal or electrical connection which either locks the switch on or off, connected through or directly to the PV STOP POTENTIAL VOLTAGE AND HAZARD STOP SYSTEM main control panel. A visible and/or audible indicator allows for the first responder or system maintenance crew to have definitive feedback at the PV Stop main control panel, as to the off or on status or power output of the controlled system. In the off position the relay/switch renders the load side leads or electrical wiring from the solar electrical device or any other device controlled by PV STOP, dead or un-charged. A Lockout code sequence and/or mechanical lockout device mechanism is required to re-energize any potential hazard controlled by the PV Stop system subsequent to remedy of the hazard event conditions.

The present invention also provides a system of stackable self-registering, water proof J-box sleeves covers and MF/J boxes to stack or add on a multiplicity of devices and enclosures to an electrical junction box or a MF/J box as described and claimed in the invention.

The inventive device or system provides a means to add into the MF/J box enclosures, any number of electrical, electro-mechanical or other control devices to provide for modularity or plug and play rapid installation or removal/replacement, upgrading, assembly and disassembly of stacked MF/J boxes and the enclosed devices.

The inventive device or system provides for a multiplicity of connectors, contacts, leads, wiring harnesses, and varying configurations of electro-mechanical devices.

The inventive device or system provides for the control of the devices within the MF/J boxes through a central control panel such as PV Stop, Fire, and Alarm or other control and command generating systems for electrical and mechanical devices.

The present invention also provides an energy storage and management system of stackable self-registering cases/enclosures, water proof J-box sleeves covers and MF/J boxes to stack or add on a multiplicity of devices and enclosures to an electrical junction box or a MF/J box as described and claimed in the invention.

The inventive device or system provides a mean to add into the system's cases/enclosures MF/J box enclosures, any number of electrical, electro-mechanical or other control devices to provide for modularity or plug and play rapid installation or removal/replacement, upgrading, assembly and disassembly of stacked components, MF/J boxes and the enclosed devices.

The inventive device or system provides for a multiplicity of connectors, contacts, leads, wiring harnesses, and varying configurations of electro-mechanical devices.

The inventive device or system provides for the control of the devices within the MF/J boxes or enclosures through a central control panel such as PV Stop, Fire, and Alarm, diagnostics, data logging, monitoring, reporting or other control and command of generating systems for electrical and mechanical devices and any other utilization equipment.

### BRIEF DESCRIPTION OF THE SEVERAL VIEWS OF THE DRAWINGS

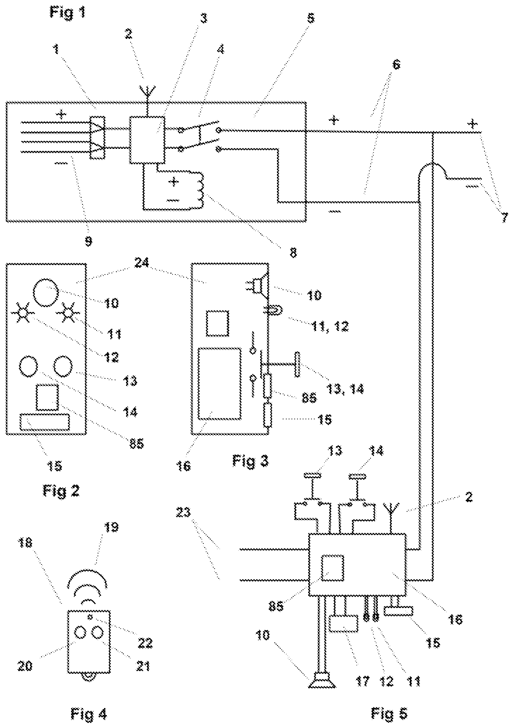

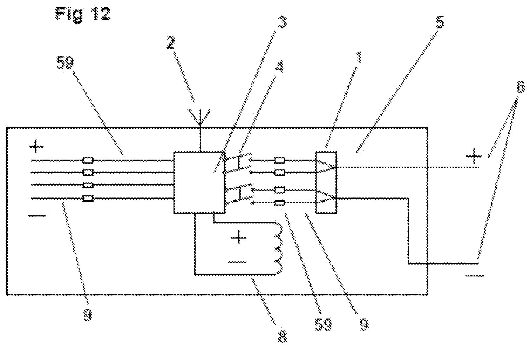

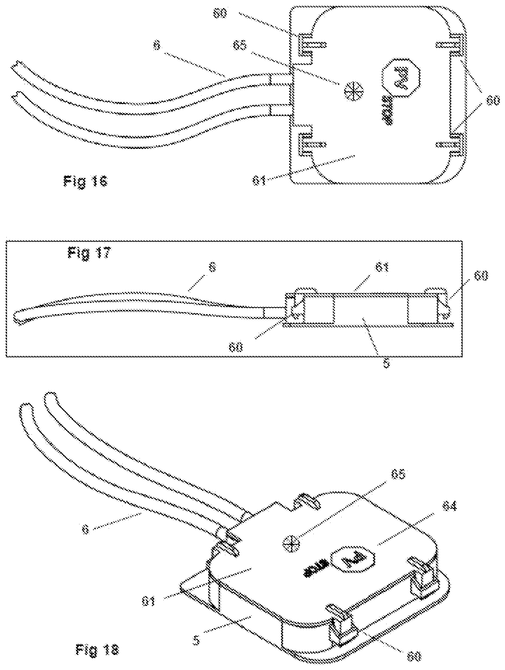

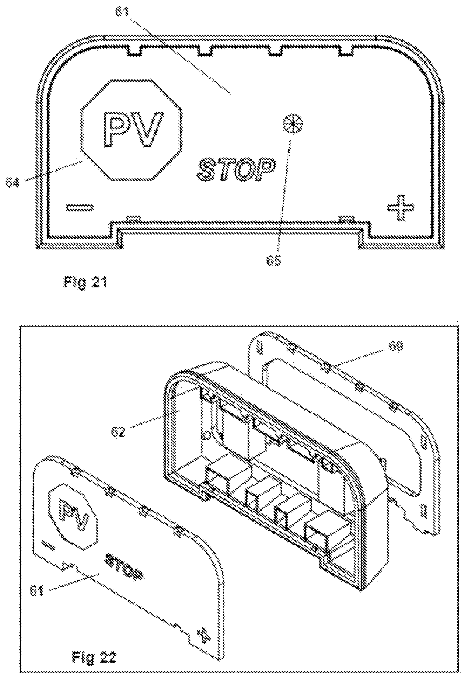

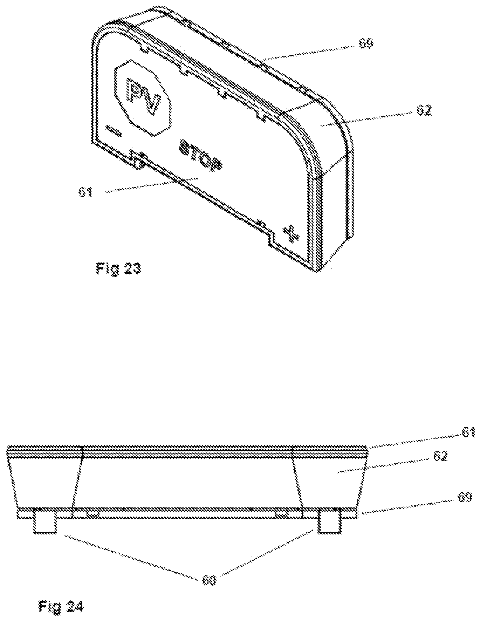

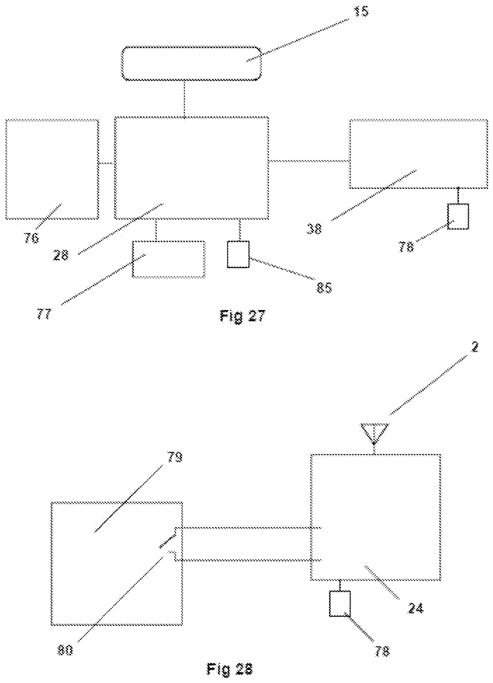

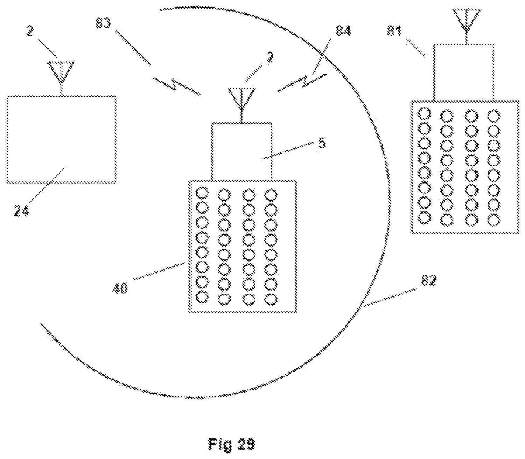

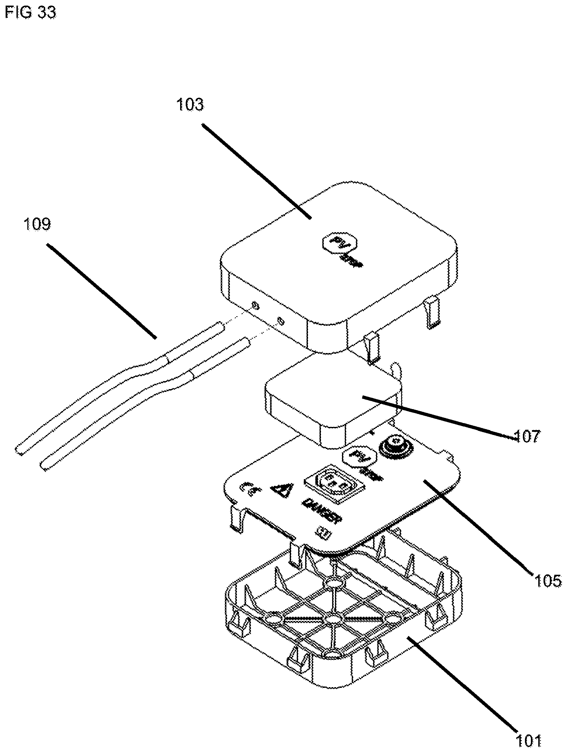

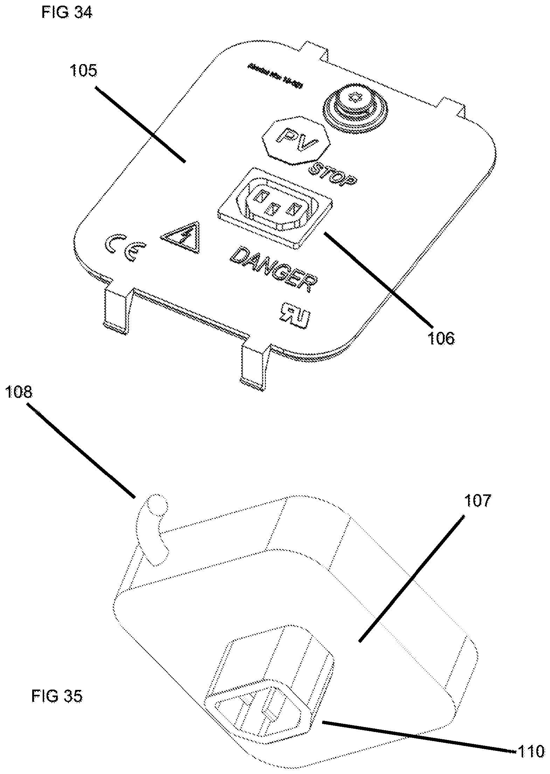

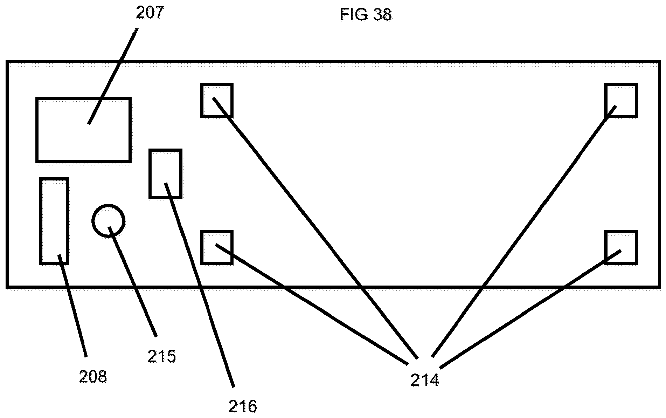

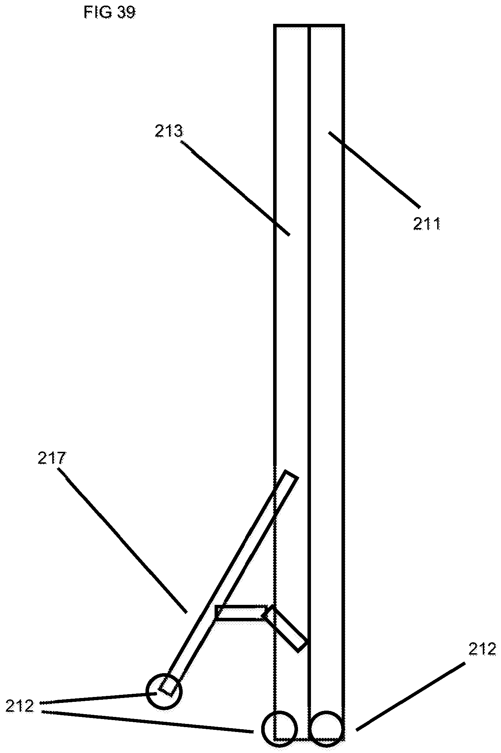

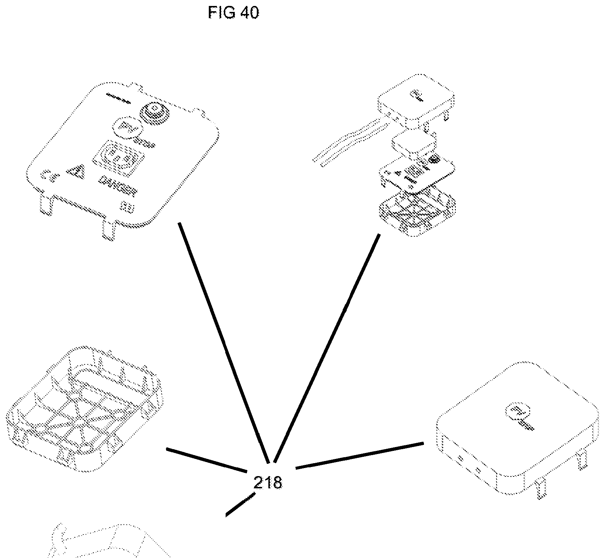

The accompanying drawings Figures 1 - 40 in the attachment, which are incorporated into and form a part of the specification, illustrate one or more embodiments of the present invention and, together with the description, serve to explain the principles of the invention. The drawings are only for the purpose of illustrating one or more preferred embodiments of the invention and are not to be construed as limiting the invention. In the drawings:
1. Terminal Block in solar junction box
2. Antennae
3. Receiver / Transceiver
4. Single Throw - Double Pole Relay/Switch (or multiplicity of poles and/or throw) either normally open or normally closed.
5. Solar PV MF Junction Box (MF - Multi Function) Panel or Enclosure
6. Junction Box Leads
7. Conductors to next PV unit or to Inverter
8. Relay Coil
9. Solar PV BusBar Tabs
10. Speaker/Annunciator
11. Red LED Indicator Light
12. Green LED Indicator Light for Utility Grid or any line supply voltage
13. OFF Switch
14. On Switch
15. LCD LED or other Voltage Status Display Panel (Readout)
16. Printed Circuit Board w/ Arduino, Raspberry Pi or similar platform
17. Backup Battery
18. Remote Transmitter
19. Remote Signal (RF)
20. On Button
21. Off Button
22. Indicator Light
23.110 v (or any voltage) Power In to Power Supply and to Charge Backup Battery
24. PV STOP Weather Proof Enclosure Controller Panel
25. Transformer
26.12 VDC Power Supply
27. 6 Pole Single Throw Switch (or any number poles or throw or relay)
28. Main Printed Board (with Arduino, Raspberry Pi, terminals etc.)
29. 12 Volt Regulator (or any voltage)
30. Wireless Transmitter/Transceiver to Gas and/or Liquid and/or Material
31. Wireless Transmitter/Transceiver to PV Module and/or Any Power Supply or Source
32. Wireless Transmitter/Transceiver to Utility/Grid and/or any Power Supply or source for breaker interrupt of any load usage on any utilization equipment or building load.
33. LED indicator light for Gas and/or Liquid and/or Material
34. Hard wire power to Gas and/or Liquid and/or Material
35. Inputs/Outputs to Communicator RJ11, RJ45, Coaxial, Fiber Optics etc. or any other means
36. Still and/or Video Camera - Local or off site streaming via POE or any power source
37. PV module On Indicator light
38. Communication Module Incoming or outgoing fire, status, internet, broadband fiber optic, coaxial, any hard wire or any wireless signal.
39. Retro-Fit WP MF J-Box Enclosure Panel
40. PV Module
41. Manufacturer Factory Lead Spool
42. Y- Connector
43. Power from PV Stop Device
44. Gas and/or Liquid and/or Material Supply Source
45. To Gas and/or Liquid and/or Material Utilization Equipment
46. Seismic Actuated Valve
47. Solenoid Valve or other Actuated Valve w/ mechanical lock out
48. WP Enclosure for Remote Valve/Power Equipment Controls
49. Seismic Simulator (Vibrator)
50. Circuit Breaker (Remote Controlled Multi-Pole Breaker as required)
51. From Power Source (Utility Grid or any Source)
52. Power Load To Meter or Utilization Equipment
53. Power/Grid On Indicator Light
54. 12 VDC Power Supply
55. Transformer
56. Lead Connectors
57. Mini (or any sized for load) Solar PV Module Power Supply for Remote Receiver/Transceiver and Battery Power Supply
58. Standard Solar PV Module or any solar PV module w/ Retrofit J-Box
59. Flexible Leads w/ terminals for solar bus tabs
60. Snap in or friction projection and detent retention or equivalent fastener clip system
61. J-Box Cover
62. Retrofit MF J-Box Enclosure Sleeve extension
63. Seal
64. Logo - in this depiction for PV Stop trademark
65. Liquid tight Vapor transport, 2 way liquid moisture exclusion device
66. Wireless Control Personality Module
67. Diodes Only Personality Module
68. Pressure Clips or Tab Terminals
69. MF J-Box Adapter Plate
70. Diodes
71. BusBar Tabs to Solar PV MF Junction Box (MF - Multi Function) Panel or Enclosure to Leads Circuit
72. MF J-Box Printed Circuit Board
73. Relay
74. MCU - Micro Controller
75. Transceiver
76. Peripherals Module - relays, switches, sensors, keypad/input
77. USB Storage
78. Auxiliary Input/Output (I/O)
79. Fire Alarm System
80. Shutdown Relay Contact
81. Solar Module Outside range of 24 Control Panel
82. Range for Wireless Communication with Remote Devices
83. Signal from Control Panel 24
84. Signal from In-Range Transmitter/Transceiver to Out of Range Equipment or PV Module 81
85. Keypad/Touch Screen or other similarly capable input device to key in commands, communications, programming, security codes.
86. Wind Turbine
87. Backup Battery or Battery System
88. Backup or Auxiliary Generator
89. Materials Conveyor
90. Motorized Equipment
91. Material Handling (or any) Vehicle
92. Process Piping (liquid or gas)
101. PV Stax Multi-Function/Junction Base
102. Locking Female Clip Receiver for Male clip (4)
103. PV Stax Multi-Function/Junction Cover
104. Locking Male Clip
105. PV Stax Multi-Function/Junction Cover with Outlet Receptacle
106. PV Stax Multi-Function/Junction Outlet Receptacle
107. PV Stax Multi-Function/Junction Micro-Inverter or DC to DC Converter
108. PV Stax Multi-Function/Junction Micro-Inverter AC Leads
109. DC Leads
110. PV Stax Multi-Function/Junction Micro-Inverter or DC to DC Converter Male Plug
201. PV Stor System Interior Case/Enclosure Base
202. Battery Bank w/ Battery Management System
203. DC Disconnect
204. DC Input Leads
205. Inverter
206. MF/J Box / Enclosure
207. PV Stop or Rapid Shutdown Controller 208. Manual or Automatic Transfer Switch
209. Utility Feeder
210. Load Feeder
211. PV Stor System Case/Enclosure Base
212. Wheel
213. Exterior Case/Enclosure Cover
214. Positive or Passive Ventilation
215. Digital or Analog Line Voltage Meter
216. Inverter Display
217. Fold-Out Wheel Assembly
218. PV Stop - PV Stax Components

Figure 1 is a schematic drawing of a solar PV MF junction box 5 containing a receiver/transceiver 3, receiving signal through antenna 2 connected to the solar busbar tabs terminal block and a single throw double pole relay 4 and powered by a relay coil 8 to operate the relay 4 through the power produced by the solar PV module, to effect positive disconnect of the junction box leads 6.
Figure 2 is an interface panel within a weather proof enclosure control panel 24 containing a speaker/annunciator 10, on and off (green and red) indicator lights 11 12, on and off manual switches (green and red) 13 14, a keyboard interface 85 and an LCD display panel 15.
Figure 3 is a side view 24 cutaway section of Figure 2.
Figure 4 is a remote transmitter 18, in this case an RF transmitter with indicator light 22, green on button 20 and red off button 21, sending signal 19 to the equipment controlled by the PV Stop System.
Figure 5 is a schematic of printed circuit board 16 depicting 2 switches 13 14, antennae 2, speaker/ annunciator 10, backup battery 17, LED indicator lights 11 12, input interface keypad/touchscreen 85, display 15, power feed from Line In 23, and connected to the switched conductors 7.
Figure 6 is a schematic of a remote controlled valve or shutoff device 47, within a weather proof enclosure 48, depicting a power feed 43 of any voltage, in this case 12 VDC, supplying a receiver/transceiver 3, interrupted via relay 4, when actuated, shuts off the valve or shutoff device 47 and indicator light 33, providing shutoff control between the supply 44 and the building or utilization equipment delivery 45.

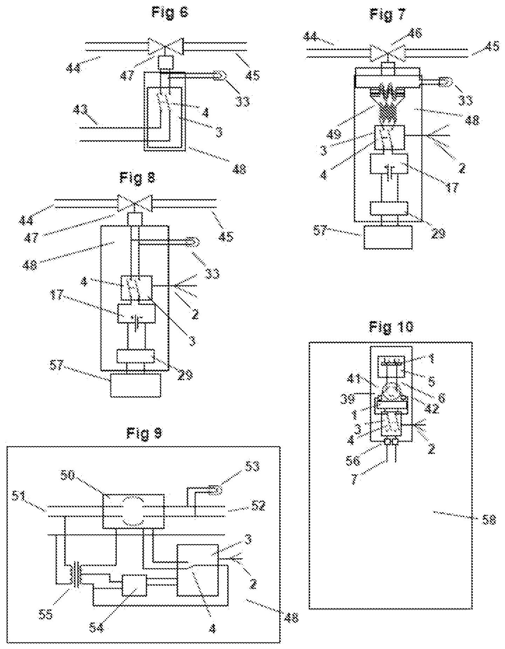

Figure 7 is a schematic similar to Figure 6 with the additional capability of being affixed to a seismic valve or shutoff device 46, between the supply 44 and the building or utilization equipment delivery 45, within a weather proof enclosure 48, whereby the relay 4, actuates the Seismic Simulator 49, to simulate earthquake. Power is supplied by a backup battery 17, which is charged through voltage regulator 29 by a solar PV panel 57, sized for the load required. Signal is received by antenna 2, in receiver/transceiver 3, receiving in this case RF signal 19 from main control panel 24. The transmitter/transceiver 3 can transmit valve status back to any device in PV STOP base unit 24.
Figure 8 is a schematic similar to Figure 6 with wireless actuation capability, receiver/transceiver 3 affixed with antenna 2, receiving in this case RF signal 19, within a weather proof enclosure 48, whereby the relay 4, actuates the Valve or shutoff device 47. Power is supplied by a backup battery 17, which is charged by a solar PV panel 57 through voltage regulator 29, sized for the load required. The transmitter/transceiver 3 can transmit valve status back to any device in PV STOP base unit 24.

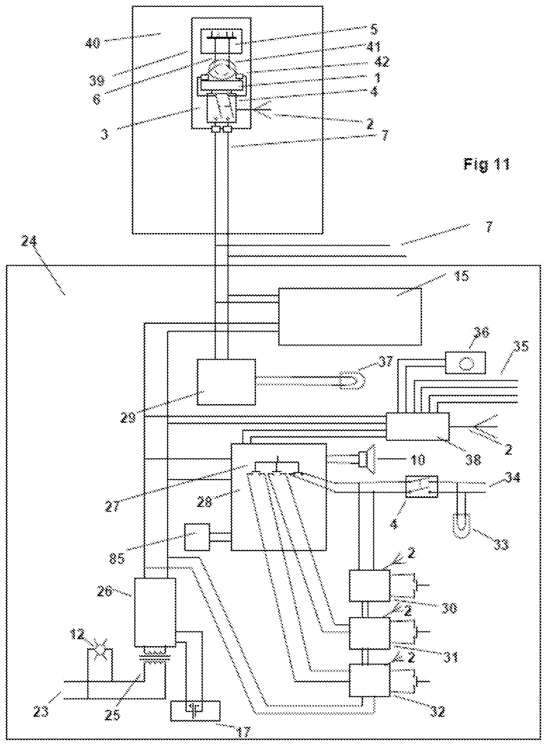

Figure 9 is a schematic of a shutoff device depicting the capability of interrupting any power source of any voltage or phase configuration. Figure 9 depicts a single phase system supplied by source 51, configured with circuit breaker 50, which can be actuated by remote signal received by antenna 2, on receiver/transceiver 3 from control Panel 24 depicted in Figure 11. The device depicted in Figure 9 receives power from line voltage 51, conditioned by transformer 55, to a power supply 54 depicted here as 12 VDC, supplying power to remote receiver/transceiver 3, receiving in this case RF signal 19 to activate relay switch 4. A power indicator light 53 is located on the load side of the circuit breaker 50 to indicate power on or off status to persons in need of positive system status feedback.
Figure 10 is a schematic of a remote shut off device containing a multiplicity of electronic devices and connectors enclosed in a waterproof enclosure 39 that fits over a standard PV solar module MF J-box or enclosure 5, in a standard, non-standard or any Solar PV module 58, providing a lead spool 41, allowing for factory Module leads 6 to be wound up and gathered with the ends terminating in a Y connector 42, feeding power to terminal block 1 and receiver/transceiver 3, receiving in this embodiment RF signal 19 through antenna 2 to activate relay switch 4. Power under normal conditions is fed from Relay 4 to lead connectors 56 into standard manufacturer leads 7 to next module in array or to inverter. Waterproof Retrofit Enclosure 39 is fitted with a water tight access cover (not shown).
Figure 11 is a schematic of an embodiment expanding the capabilities depicted in Figures 1-5 of the main PV STOP - POTENTIAL VOLTAGE AND HAZARD STOP SYSTEM panel enclosure 24 with a multiplicity of electronic devices, connectors, communication modules, transmitters, receivers/transceivers, and mechanical devices. Power for the system 23, with connected power indicator light 12, feeds transformer 25, supplying conditioned power to power supply 26, thus feeding power to transmitters/transceivers 30 31 32, or more not shown, and supplying power to Main Printed Board 28, communication module 38, PV module voltage status display readout 15, and/or a multiplicity of voltage displays 15 (not shown). The main controller PB 28 is equipped with a mechanical or electronic switch 27 of any number of poles, (in this depiction six pole) which actuates all of the connected transmitters/transceivers 30 31 32, and direct transmitted connection to relay 4, an embodiment of remote personality module (or more not shown). Main PB controller 28 is equipped with a speaker 10 or other sound communication for positive system status feedback. Remote Receiver/transceiver 3 signals relay 4 in remote enclosure 48 and connected to indicator light 33 for positive status feedback on any system/equipment/appliance controlled by transmitter/transceiver 30 or relay 4 on load line 34. Each transmitter/transceiver 30 31 32 or more is fitted with its own individual switch 13 14 for isolated control of remote Personality modules from the rest of the system. Communication module 38 is fitted with input/output to fire alarm systems, keypad/touchscreen input 85, hard wired 35 or through any wireless signal through antenna 2, to equipment manufacturers/monitoring, owner, any need-to-know personnel, first responder, still/video camera 36 either/or archived (remote or local) and/or streaming live, and capable of two way communication to and from main system controller PB 28 to actuate any transmitter/transceiver, switch, relay, signal communication embodied within PV STOP, POTENTIAL VOLTAGE AND HAZARD STOP SYSTEM panel enclosure 24. Voltage regulator 29 is fitted with PV Module Status light 37 either wired as shown or wireless, for positive system voltage status feedback. Multiple PV STOP, POTENTIAL VOLTAGE AND HAZARD STOP SYSTEMS embodied within Enclosure 24 can be installed at multiple locations on site and daisy-chained via hard wire or wireless signal through communication modules 38 thereby providing safety protection and scene control for large expansive facilities with no distance or layout configuration limitations. A transmitter/transceiver 3 can communicate to any remote wireless control device location such as depicted in Figure 7 and can transmit status back to any device in via transceiver/receiver 30 31 32 in PV STOP base unit 24.
Figure 12 is a schematic embodiment of a PV module MF J-Box or enclosure 5 where by the PV solar busbar tabs 9, are severed and reconnected through Flexible Leads w/ terminals 59, connected to receiver/transceiver 3, receiving signal through antenna 2 to be switched by relay 4, fitted with flexible leads w/ terminals 59, connected to remaining downstream busbar tabs 9 into PV j-box terminal bar 1, feeding j-box leads 6. Power to receiver/transceiver 3 and relay 4 is provided by power from PV solar busbars 9. Relay 4 is operated through relay coil 8.

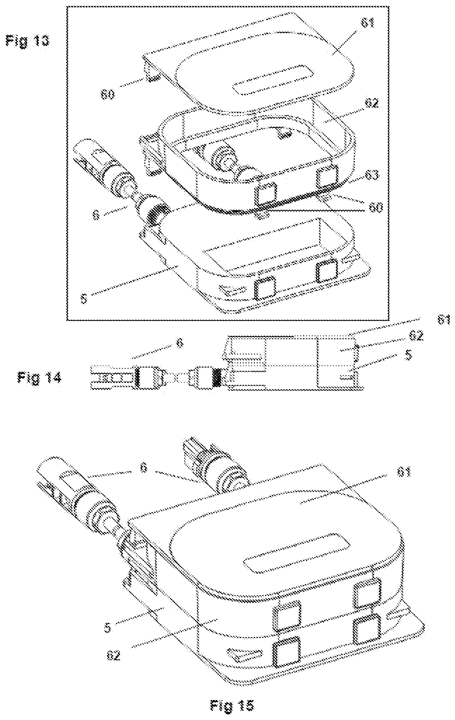

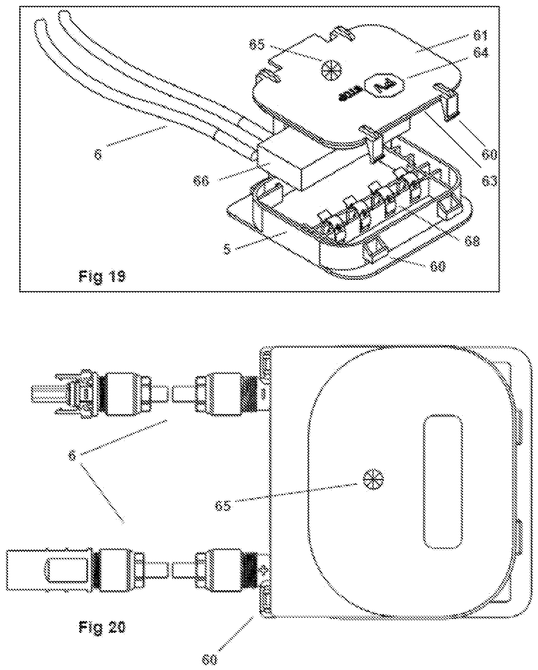

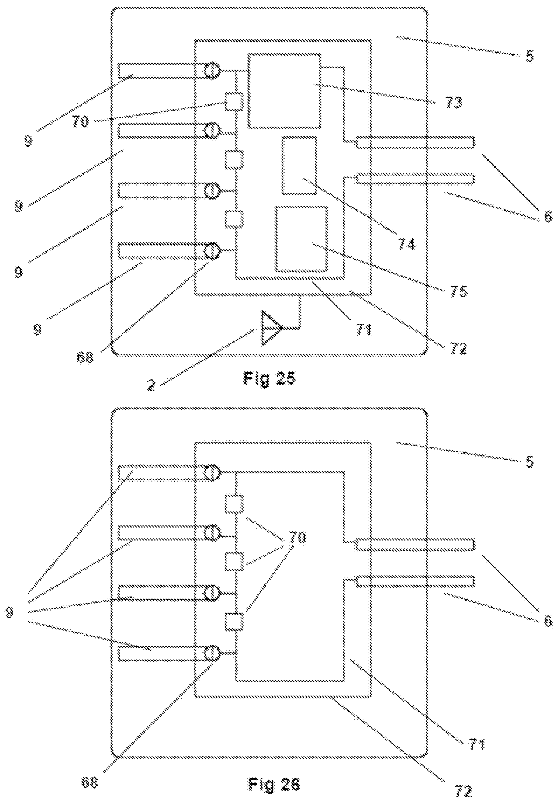

Figure 13 is an exploded view of a factory J-box or enclosure 5 with factory leads 6. The factory J-box or enclosure cover 61 is removed from j-box enclosure 5. A Retrofit MF J-Box or Enclosure Sleeve extension 62, configured with seal 63 and Snap in or friction projection and detent retention clip system 60, is positioned to snap onto j-box or enclosure 5 and provides space for receiver/transceiver 3, Relay switch 4, antenna 2, relay coil 8, and the PV solar busbar tabs 9 and flexible leads 59 which all comprise what is depicted in Figure 25 and as a Wireless Control Personality Module 66 in Figure 19. Cover 61 is then fitted to closure on Sleeve Extension 62.
Figure 14 is a side elevation view of Fig 13, depicting J-box or enclosure 5 with leads 6, fitted with Retrofit J-Box/Enclosure Sleeve extension 62 and j-box enclosure cover 61.
Figure 15 is an assembled view of Fig 13 and 14, showing J-box or enclosure 5 with j-box leads 6, Retrofit MF J-Box Sleeve extension 62, and fitted with j-box/enclosure cover 61.
Figure 16 is a top view of a preferred embodiment of PV Stop J-box or enclosure assembly depicting j-box/enclosure cover 61, Snap in or friction projection and detent retention clip system 60, Liquid tight Vapor transport, 2 way liquid moisture exclusion device 65, and j-box leads 6.
Figure 17 is an side elevation view of Fig 16 depicting J-box or enclosure 5, J-box leads 6, Snap in or friction projection and detent retention clip system 60, j-box/enclosure cover 61, and j-box leads 6.
Figure 18 is a 3-d perspective view of Fig 16 and 17 depicting the assembly of a PV Stop J-box or enclosure 5, with PV Stop logo 64, Liquid tight Vapor transport, 2 way liquid moisture exclusion device 65, Snap in or friction projection and detent retention clip system 60, j-box/enclosure cover 61, and j-box leads 6.
Figure 19 is an exploded view of a preferred embodiment of the PV Stop MF J-box or enclosure 5 with J-box leads 6, assembly depicting Snap in or friction projection and detent retention clip system 60, j-box/enclosure cover 61, Seal 63, PV Stop Logo 64, Liquid tight Vapor transport, 2 way liquid moisture exclusion device 65, Wireless Control Personality Module 66 (interchangeable with Diodes Only Personality Module 67 not shown), and Pressure Clips or Tab Terminals 68.
Figure 20 is a top view of Fig 19 J-box or enclosure 5 assembly showing j-box leads 6, Snap in or friction projection and detent retention clip system 60, and Liquid tight Vapor transport, 2 way liquid moisture exclusion device 65.
Figure 21 is a top view of a possible embodiment for a retrofit J-box or enclosure sleeve 62 assembly providing a space and location for a personality module to snap over an existing manufacturers j-box or enclosure 5 as shown in the exploded view Fig 22 thus enabling PV Stop upgrades to existing manufacturers PV module's J-box or enclosure.
Figure 22 is an exploded 3-d view of a possible embodiment for a retrofit J-box or enclosure sleeve 62 assembly providing a space and location for a personality module 66 or 67 (not shown) to snap over an existing manufacturers j-box or enclosure 5, fitted with a j-box/enclosure cover 61, and J-Box or enclosure Adapter Plate 69.
Figure 23 is a 3-d view of a possible embodiment for a retrofit J-box or enclosure sleeve 62 assembly providing a space and location for a personality module 66 or 67 (not shown) to snap over an existing manufacturers j-box or enclosure 5, fitted with a j-box/enclosure cover 61, and J-Box/enclosure Adapter Plate 69.
Figure 24 is an elevation view of assembly depicted in Fig 23 showing Snap in or friction projection and detent retention clip system 60, a j-box/enclosure cover 61, a retrofit J-box or enclosure sleeve 62, and J-Box/enclosure Adapter Plate 69.
Figure 25 is a schematic preferred embodiment of a Wireless Control Personality Module 66, within a PV j-box or enclosure 5, depicting the possible arrangement of solar PV busbar tabs 9, connecting to terminals 68, diodes 70, circuit 71, connected to j-box leads 6, on a printed circuit board 72 fitted with antenna 2, having located upon circuit board 72, a Relay 73, MCU - Micro Controller 74 and Transceiver 75.
Figure 26 is a schematic preferred embodiment of a Diodes Only Personality Module 67, within a PV j-box or enclosure 5, depicting the possible arrangement of solar PV busbar tabs 9, connecting to terminals 68, diodes 70, circuit 71, on PCB 72, connected to j-box leads 6, functionally providing a simple jumper module between PV busbars 9, through diodes 70, and circuit 71, to the PV j-box leads 6.
Figure 27 is a preferred embodiment schematic block diagram depicting an LCD display 15, connected to a main control Printed Circuit Board (or processor board) 28, with an external peripherals module 76, a USB storage module 77, a keypad/touchscreen input device 85, and a Communications Module 38 and Aux I/O 78.
Figure 28 is a schematic block diagram showing relationship between Fire Alarm System 79 with Shutdown Relay Contact 80, and the Main PV Stop Control Panel 24, fitted with antenna 2 and Aux I/O 78.
Figure 29 is a schematic block diagram showing a relationship in terms of range 82, from the Main PV Stop Control Panel 24 with antenna 2, sending signal 83 to (receiver/transceiver 3 not shown), in J-box or enclosure 5 fitted with antenna 2 on PV module 40, which then sends signal 84 to Out of Range PV module 81 demonstrative of a daisy chain capability of the PV Stop System.

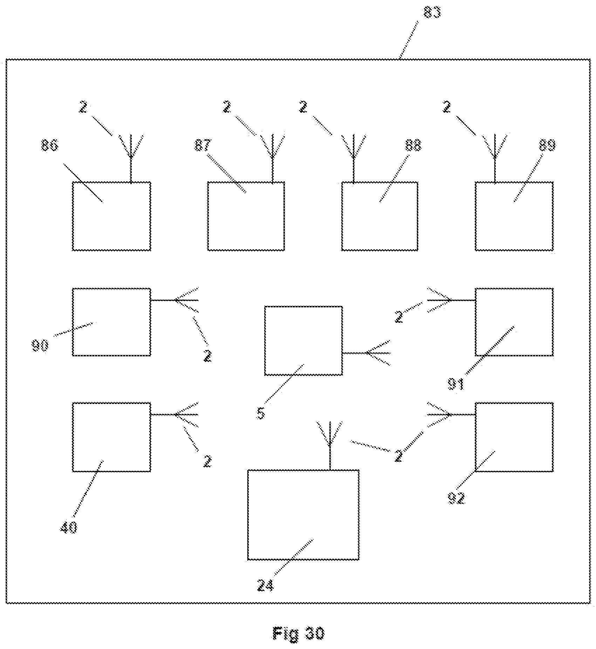

Figure 30 is a schematic block diagram showing a relationship to demonstrate the capability of the PV Stop system to communicate between Main Control Panel 24, either directly or through Junction/Enclosure 5 fitted with Antenna 2, containing a wireless or wired personality module, to control via wireless signal, the on/off status of Wind Turbine 86, Backup Battery or Battery System 87, Backup or Auxiliary Generator 88, Materials Conveyor 89, Motorized Equipment 90, Material Handling (or any) Vehicle 91, Process Piping (liquid or gas) 92, or any other potential hazard connected via wired or wireless communication with the PV Stop System.
Figure 31 is a schematic drawing of a PV Stax Multi-Function/Junction Base depicting the MF/J base box 1, configured with Locking Female Clip Receiver 2.
Figure 32 is a schematic drawing of PV Stax Multi-Function/Junction Cover 3, configured with Locking Male Clip 4.
Figure 33 is a schematic drawing of an exploded assembly of multiple possible configurations of PV Stax Multi-Function/Junction MF/J System Components depicting a PV Stax Multi-Function/Junction Cover 3, with DC Leads 9, MF/J Micro inverter or DC to DC Converter 7, a PV Stax Multi-Function/Junction Cover 5, with MF/J Outlet Receptacle 6, and a MF/J Base 1.
Figure 34 is a schematic drawing depicting a PV Stax Multi-Function/Junction MF/J Cover 5, with a MF/J Outlet Receptacle 6.
Figure 35 is a schematic drawing depicting a PV Stax Multi-Function/Junction Micro-Inverter 7, with AC Leads 8, and MF/J Male Plug 10.
Figure 36 is a schematic drawing of a PV Stor System Enclosure with batteries and battery management system 2, DC Disconnect 3, Inverter 5, Transfer Switches 8, Rapid Shutdown Controller 7, MF/J Junction Box 6.
Figure 37 is a schematic drawing of PV Stor System Side View depicting base 11, cover 13 and wheels 12.
Figure 38 is a schematic drawing of the PV Stor System cover face 13, depicting transfer switches 8, line voltage meter 15, rapid shutdown control interface 7, inverter display 16 and ventilation 14.
Figure 39 is a schematic drawing depicting a side view of PV Stor System case/enclosure base 11, cover 13, with base wheels 12 and fold out wheels 17.
Figure 40 is a schematic drawing depicting PV Stor System PV Stop and PV Stax multiple energy input/output equipment and components.

### DETAILED DESCRIPTION OF THE INVENTION

As depicted in Figure 1-30, power from the solar PV module(s) or other source comes into the junction box/enclosure 5, connects to terminal block 1, then feeds the receiver 3, which operates relay 4 to feed or interrupt power to junction box leads 6, power then conducted to next PV module or the inverter, and also feeding the printed circuit board/microprocessor board in Main Control Panel enclosure 24. The preferred embodiment would be the devices contained within a Wireless Controlled Personality Module within junction box/enclosure 5 as depicted in Figure 19 to be installed on each and every solar PV power source (panel) in the system. The objective is to positively shut off all power emanating from the junction box/enclosure 5 into the junction box leads 6 so that first responders, emergency and solar maintenance workers can be safe from electric shock or electrocution. This switching/relay system could be utilized for any power source, back up generation, co-generation, electric utility system, wind generator, etc.

While the preferred embodiment of the invention includes application directed to the Solar PV industry and trades, the invention is designed to interrupt any power, energy, gas, fuel, chemical or material source for the safety of workers and emergency first responders including but not limited to any electrically powered tool or system, backup power generation, co-generation systems, wind turbine systems, process piping system, hazmat material delivery system, conveyor of any type, material handling, vehicle, stored energy system, moving machine parts, robotics, automation or any other potential mechanical, electrical, chemical, gas or fuel delivery system, to provide a definitive and fail safe complete shutdown of all electrically charged parts in an electric power system and/or remove any potential supply or machine/appliance hazard controlled by the PV STOP system, as described herein, or of any sort, with verifiable visual and/or audible system status feedback.

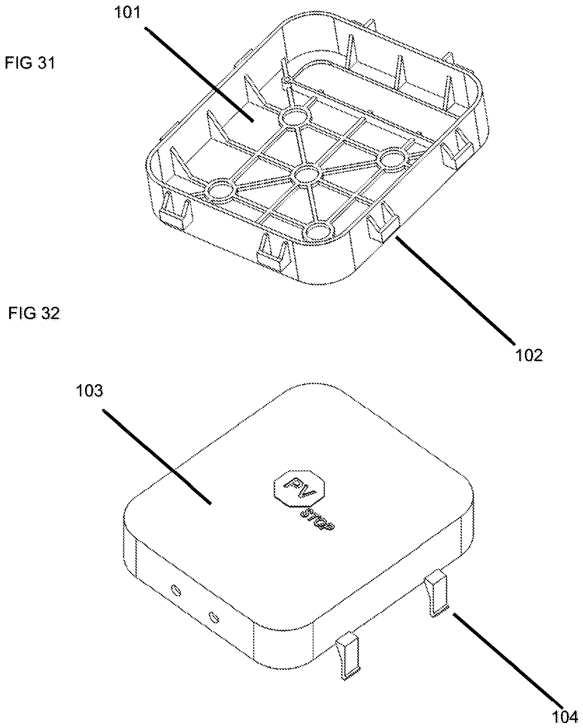

As depicted in Figures 31 - 35, the invention is also of a system to provide a multi-function connection capability to contain and provide for stacking, mounting self-registering Multi-Function Junction (MF/J) boxes that contain a multiplicity of control electronics and can be stacked, removed, replaced, and/or upgraded with a minimal of steps or connection processes in order to simplify methods and conserve on or add value, capabilities to materials and electrical/mechanical equipment. The system can be engaged or utilized by any EMS/First Responded Service Technician, authorized personnel in any field, Contractor, manufacturer, BOS integrator and any assembler of systems that require a multiplicity of interfacing devices to be in proximity, connection or contact to each other, including Standard Electrical Boxes and enclosures, DC to DC Converters, Micro-Inverters, Module Level Control Electronics, Safety Systems, Monitoring Systems, Rapid Shutdown Systems, Micro Processors and power Semi Conductors.

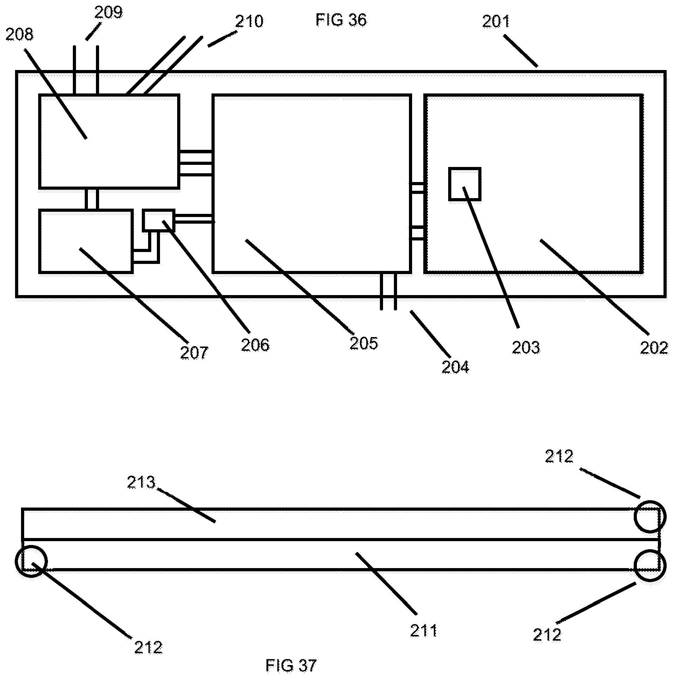

As depicted in Figures 36 - 40, the invention is further of a UNIVERSAL ENERGY STORAGE and MANAGEMENT system to provide a multi-function connection capability to contain and provide for OFF-Grid or Grid Tied Power systems for stacking, mounting self-registering varying equipment and Multi-Function Junction (MF/J) boxes that contain a multiplicity of control electronics and can be stacked, removed, replaced, and/or upgraded with a minimum of steps or connection processes in order to simplify methods and conserve on time or add value and capabilities to materials and electrical/mechanical equipment. The system can be engaged or utilized by any EMS/First Responded Service Technician, authorized personnel in any field, Contractor, manufacturer, Utility Industry, BOS integrator and any assembler of systems that require a multiplicity of interfacing devices to be in proximity, connection or contact to each other, including Battery or other storage, Standard Electrical Boxes and enclosures, DC to DC Converters, DC Inverters, Micro-Inverters, Module Level Control Electronics, Safety Systems, Monitoring Systems, Rapid Shutdown Systems, Micro Processors and power Semi Conductors.

### Industrial, Residential and Commercial Applicability:

The invention is further illustrated by the following non-limiting examples.

### EXAMPLE 1

This PV STOP - POTENTIAL VOLTAGE AND HAZARD STOP SYSTEM can be used to control a single PV power source, multiple PV module power sources, a backup generator system, a battery backup power system, a wind turbine power generator, and an electrical energy source of any type to render the entire system off for the safety of workers and emergency first responders. A mock up was made to disable and re-energize a single PV panel with a backup battery system and it was 100% effective in completely interrupting all power output from the PV electric power source rendering all downstream devices, receptacles, outputs, usb, 12 v 110 v and all other electrically connected parts off or disabled. It was then able to reconnect all simultaneously.

### EXAMPLE 2

As depicted in Figure 1-30, the PV STOP - Potential Voltage and Hazard Stop System incorporating a multiplicity Micro Processor Control Boards, Switches, Relays, Transmitters. Transceivers, Receivers, Batteries, circuits, Transformers, Communicators, Displays, Annunciators, Indicator Lights, Voltage Regulators, Relays, Antennas, can be used to control any Electrical Power Source, any Hazardous Material Delivery system, any gas or liquid fuel delivery system, any process piping or delivery system, or any other charged system supplying any utilization equipment/machinery including but not limited to conveyor systems, vehicles, robotics, automated production lines, fuel burning appliances/equipment, or any other system or equipment, to render all in a safe state of shutdown for the purpose of allowing first responders, emergency workers and authorized personnel to take complete control of all potential hazards that could escalate or contribute to the dangers of the scene and remove the necessity for other personnel (who may be absent, injured or otherwise unavailable), or those with specific site/equipment knowledge to be called to action. First responders need not know the locations or any safety stop, lock out or any other switching, relays, controllers or valves on site. They need only to actuate the one or more shut-off mechanism in PV STOP Main Controller Panel device to render all or some systems off, either by physical switch, relay, remote call in, computer access online, wirelessly, via Bluetooth, smart phone, RF, WIFI, or any other means of communication to the PV and Hazard Stop Device. PV Stop Potential Voltage and Hazard Stop System includes capability to shut off the Electric Utility Supply to the premises at the point of service drop, drip loop, on utility pole, on ground at transformer, at service entrance or anywhere on site. PV Stop Potential Voltage and Hazard Stop System Devices can be utilized to shut off any backup generator, wind turbine, Battery Backup, Gas or Fuel valve and/or delivery system charged with any electric, air, gas, fuel, material conveyance, process piping of hazardous materials/chemicals etc. Vehicles/forklifts/cranes and other material handling equipment can be outfitted with receivers to shut down so that operator does not inadvertently enter a hazardous area where first responders are on scene and have actuated the PV and Hazard Stop System to effect scene safety. The Main Control Panel includes capability to disconnect all, some, or a sequence of PV Stop controlled equipment. Fire, first responder or technician personnel having the complete control of any potential hazard controlled by PV Stop. Security for preventing unauthorized access to the PV Stop system is accomplished through command sets generating secure codes, rolling codes, or otherwise encrypted signals to the PV Stop controlled equipment. This security provision also prevents unauthorized regeneration in any disabled equipment or system controlled by PV Stop until inspection/verification that equipment and system integrity is assured.

### EXAMPLE 3

The PV STOP, POTENTIAL VOLTAGE AND HAZARD STOP SYSTEMS embodied in the figures 1 - 30 are capable, either singly or in multiples, of controlling any electric, mechanical, pipe flow, gas flow, chemical flow, material flow, any powered machine, any combustion machine or vehicle, any electrical vehicle, any valve of any type, or any array of similar or dissimilar utilization equipment, over any distance in any size or configuration of residence, business, industrial or manufacturing facility, power plant, co-generation plant, process plant or venue. Through a series of "Daisy Chained" Wireless (or wired) Controlled Personality Modules, any range limitations of signal can be overcome. In a number of tests, indoors and outside, distances up to 200 feet of effective control of equipment and PV Modules was confirmed. The range of signal can be modified by frequency, signal strength, differing transmitter/transceiver/receiver equipment and antenna modification to accommodate longer range as well.

Standard PV J box or MF/J Base box mounted on a PV Module fitted with a MF/J box, containing Diodes, with stackable add on that contains Module Level Control Electronics.

### EXAMPLE 4

Standard MF/J Module Base J box mounted on a PV Module fitted with a MF/J box add on that contains a DC to DC converter.

### EXAMPLE 5

Standard MF/J Module J box mounted on a PV Module fitted with a MF/J box add on that contains a Micro Inverter.

### EXAMPLE 6

Standard MF/J Module Base J box mounted on a PV Module fitted with a MF/J box add on fitted with connections, Diodes and DC leads.

### EXAMPLE 7

Standard MF/J Module Base J box mounted on an electrical enclosure or utility box of any standard fitted with a MF/J box add on fitted with connections, Diodes and DC leads or AC leads.

### EXAMPLE 8

A UNIVERSAL ENERGY STORAGE and MANAGEMENT SYSTEM in one or more enclosures containing a multiplicity of standard and custom electrical components, electro mechanical devices, inverter(s), batteries, Rapid Shutdown system, battery charge controllers and battery management systems configured to interface and connect to a Standard PV J box or MF/J Base box mounted on one or more PV Module(s) fitted with a MF/J box, containing Diodes, with stackable add on that contains Module Level Control Electronics.

### EXAMPLE 9

A UNIVERSAL ENERGY STORAGE and MANAGEMENT SYSTEM in an enclosure containing batteries, Inverter(s) and Grid Tie equipment configured to interface and connect to a Standard MF/J Module Base J box mounted on one or more PV Module(s) fitted with a MF/J box add on that contains a DC to DC converter

### EXAMPLE 10

A UNIVERSAL ENERGY STORAGE and MANAGEMENT SYSTEM in one or more enclosures containing manual and/or automatic transfer switch(es) configured to interface and connect with any power circuitry through any standard electrical junction box or Standard MF/J Module J box mounted on one or more PV Module(s) fitted with a MF/J box add on that contains a Micro Inverter.

### EXAMPLE 11

A UNIVERSAL ENERGY STORAGE and MANAGEMENT SYSTEM in one or more enclosures containing PV Stop Potential Voltage and Hazard Stop system or other rapid shutdown controllers interfacing with battery system, power input and power output in AC or DC current configured to interface and connect with an Industry standard PV J-Box or Standard MF/J Module Base J box mounted on one or more PV Module(s) fitted with a MF/J box add on fitted with connections, Diodes and, receiver or transceiver and AC or DC leads.

### EXAMPLE 12

A UNIVERSAL ENERGY STORAGE and MANAGEMENT SYSTEM in one or more enclosures containing monitoring and reporting systems to manage and control all aspects of energy input, storage and output consumption or utilization equipment.

### EXAMPLE 13

A UNIVERSAL ENERGY STORAGE and MANAGEMENT SYSTEM in one or more enclosures containing automatic or manual transfer switch(es), PV Stax Multifunction Junction module systems or other industry standard connection methods and equipment configured with Standard or MF/J Module Base J box mounted on an electrical enclosure or utility box of any standard fitted with a MF/J box add on fitted with connections for any energy generator or utilization equipment including Diodes and DC leads or AC leads.

The preceding examples can be repeated with similar success by substituting the generically or specifically described reactants and/or operating conditions of this invention for those used in the preceding examples.

Note that in the specification and claims, "about" or "approximately" means within twenty percent (20%) of the numerical amount cited.

## Claims

1. A system for personnel at readily accessible locations comprising:
one or more electrical, mechanical, transmitting and receiving devices, microprocessors and controllers configured to relay and/or switch on from a normally open configuration or off from a normally closed configuration, the source or line supply of all potentially hazardous equipment or energized/charged systems in a facility;
a visible and/or audible indicator configured to allow a first responder or system maintenance crew to have definitive on or off status of the source or line supply;
said system configured to require a lockout code sequence and/or mechanical lock out apparatus to re-energize the source or line supply; and
wherein a modular main control panel enclosure containing a communications module is configured to:
transmit and receive data to/from junction boxes/enclosures that are paired to the devices, and a processor board handling all front panel peripherals, displays, devices, and interaction, interfacing the main control box to external devices, and for supporting protocols for remote operation and telemetry, data logging for performance and forensic applications, and interaction with security and/or fire systems.

2. The system of claim 1, wherein said main control panel enclosure monitors contact closures that are interfaced to devices to allow the devices to request a shutdown of a photovoltaic module or modules.

3. The system of claim 1 or 2, additionally comprising a power interrupting/reconnecting and status notification system for an electrical power source.

4. The system of any one of claims 1 - 3, additionally comprising a power interrupting/reconnecting and status notification system for a Solar energy/heating power system.

5. The system of any one of claims 1 - 4, additionally comprising a power interrupting/reconnecting and status notification system for a Solar photovoltaic system.

6. The system of any one of claims 1 - 5, additionally comprising components for power interrupting/reconnecting on individual strings of solar energy producing systems.

7. The system of any one of claims 1 - 5, additionally comprising components for power interrupting/reconnecting on multiple strings of solar energy producing systems.

8. The system of any one of claims 1 - 5, additionally comprising components for power interrupting/reconnecting on entire arrays of solar energy producing systems.

## Patentansprüche

1. System für Personal an leicht zugänglichen Orten, das Folgendes umfasst:
eine oder mehrere elektrische, mechanische Übertragungs- und Empfangsvorrichtungen, Mikroprozessoren und Steuervorrichtungen, die konfiguriert sind, um die Quellen- oder Leitungsversorgung aller potenziell gefährlichen Ausrüstungen oder erregten/geladenen Systeme in einem Betrieb weiterzumelden und/oder von einer normalerweise offenen Konfiguration einzuschalten oder von einer normalerweise geschlossenen Konfiguration auszuschalten;
ein sichtbares und/oder hörbares Kennzeichen, das konfiguriert ist, um einer Ersthelfer- oder einer Systemwartungsmannschaft zu ermöglichen, einen definitiven Ein- oder Ausschaltstatus der Quellen- oder Leitungsversorgung aufzuweisen;
wobei das System konfiguriert ist, um eine Sperrcodesequenz und/oder eine mechanische Sperreinrichtung zu verlangen, um die Quellen- oder Leitungsversorgung wieder zu erregen; und
wobei ein modulares Hauptbedienungsfeldgehäuse, das ein Kommunikationsmodul enthält, für Folgendes konfiguriert ist:
Übertragen und Empfangen von Daten zu/von Anschlusskästen/Gehäusen, die mit den Vorrichtungen gepaart sind, und eine Prozessorkarte, die alle Frontplattenperipheriegeräte, Anzeigen, Vorrichtungen und Interaktion abwickelt, die die Hauptsteuerbox an externe Vorrichtungen anschließt, und zum Unterstützen von Protokollen für ein entferntes Betreiben und Fernmessung, Datenerfassung für Performanz- und forensische Anwendungen, und Interaktion mit Sicherheits- und/oder Brandsystemen.

2. System nach Anspruch 1, wobei das Hauptbedienungsfeldgehäuse Kontaktschlüsse überwacht, die an Vorrichtungen angeschlossen sind, um den Vorrichtungen zu ermöglichen, ein Herunterfahren von einem Photovoltaikmodul oder Modulen anzufordern.

3. System nach Anspruch 1 oder 2, das zusätzlich ein Leistungsunterbrechungs-/- wiederverbindungs- und -statusmeldesystem für eine elektrische Leistungsquelle umfasst.

4. System nach einem der Ansprüche 1-3, das zusätzlich ein Leistungsunterbrechungs-/- wiederverbindungs- und -statusmeldesystem für ein Solarenergie-/Wärmeleistungssystem umfasst.

5. System nach einem der Ansprüche 1-4, das zusätzlich ein Leistungsunterbrechungs-/- wiederverbindungs- und -statusmeldesystem für ein Solarphotovoltaiksystem umfasst.

6. System nach einem der Ansprüche 1-5, das zusätzlich Komponenten zum Leistungsunterbrechen/-wiederverbinden auf einzelnen Strängen von Solarenergie erzeugenden Systemen umfasst.

7. System nach einem der Ansprüche 1-5, das zusätzlich Komponenten zum Leistungsunterbrechen-/-wiederverbinden auf mehreren Strängen von Solarenergie erzeugenden Systemen umfasst.

8. System nach einem der Ansprüche 1-5, das zusätzlich Komponenten zum Leistungsunterbrechen-/-wiederverbinden auf ganzen Arrays von Solarenergie erzeugenden Systemen umfasst.

## Revendications

1. Système pour le personnel à des emplacements facilement accessibles comprenant :
un ou plusieurs dispositifs électriques, mécaniques, transmetteurs et récepteurs, des microprocesseurs et dispositifs de commande configurés pour se relayer et/ou s'activer d'une configuration normalement ouverte ou se désactiver d'une configuration normalement fermée, la source ou l'alimentation en ligne de tous les équipements potentiellement dangereux ou systèmes sous tension/chargés dans une installation ;
un indicateur visible et/ou audible configuré pour permettre à un premier intervenant ou à une équipe de maintenance du système d'avoir l'état marche ou arrêt définitif de la source ou de l'alimentation en ligne ;
ledit système étant configuré pour exiger une séquence de codes de verrouillage et/ou un appareil de verrouillage mécanique pour remettre sous tension la source ou l'alimentation en ligne ; et
dans lequel une enceinte de panneau de commande principal modulaire contenant un module de communication est configuré pour :
transmettre et recevoir des données vers/depuis des boîtes de jonction/enceintes couplées aux dispositifs, et une carte processeur gérant tous les périphériques, écrans, dispositifs et interactions de panneau avant interfaçant le boîtier de commande principal à des dispositifs externes et prenant en charge des protocoles pour le fonctionnement à distance et la télémétrie, la journalisation de données pour les applications de performance et de forensique, et l'interaction avec les systèmes de sécurité et/ou d'incendie.

2. Système selon la revendication 1, dans lequel ladite enceinte de panneau de commande principale surveille les fermetures de contact qui sont interfacées à des dispositifs pour permettre aux dispositifs de demander un arrêt d'un ou de plusieurs modules photovoltaïques.

3. Système selon la revendication 1 ou 2, comprenant en outre un système d'interruption/reconnexion de puissance et de notification d'état pour une source de puissance électrique.

4. Système selon l'une quelconque des revendications 1 à 3, comprenant en outre un système d'interruption/reconnexion de puissance et de notification d'état pour un système d'énergie/de chauffage solaire.

5. Système selon l'une quelconque des revendications 1 à 4, comprenant en outre un système d'interruption/reconnexion de puissance et de notification d'état pour un système solaire photovoltaïque.

6. Système selon l'une quelconque des revendications 1 à 5, comprenant en outre des composants d'interruption/reconnexion de puissance sur des chaînes individuelles de systèmes de production d'énergie solaire.

7. Système selon l'une quelconque des revendications 1 à 5, comprenant en outre des composants d'interruption/reconnexion de puissance sur plusieurs chaînes de systèmes de production d'énergie solaire.

8. Système selon l'une quelconque des revendications 1 à 5, comprenant en outre des composants d'interruption/reconnexion de puissance sur des réseaux entiers de systèmes de production d'énergie solaire.
